# EUROPEAN PATENT APPLICATION

(11) **EP 3 306 492 A1**
(43) Date of publication of application: **11.04.2018**
(21) Application number: 16807173.6
(22) Date of filing: 10.03.2016
(51) Int. Cl.: G06F 17/30, G06F 12/00

(54) **RDB SYSTEM**

(30) Priority: 08.06.2015 JP 2015116117
(71) Applicant: Media Do Holdings Co., Ltd., Tokyo 100-0003 (JP)
(72) Inventor: MORI, Hideki, Tokyo 108-0074 (JP)
(74) Representative: dompatent von Kreisler Selting Werner - Partnerschaft von Patent- und Rechtsanwälten mbB
(86) International application number: PCT/JP2016/057508
(87) International publication number: WO 2016/199466

(57) **Abstract**

A RDB system having a variable structure is to be provided. The RDB system for providing a RDB having a variable structure includes: the RDB; and a processor that performs processing on the RDB. In the RDB system, the RDB characteristically includes: a class table that manages classes as class records, the classes defining structural units for storing data; a property table that manages properties as property records related to the class records, the properties being attributes associated with the respective classes; an instance table that manages instances as instance records related to the class records, the instances being entities belonging to the respective classes; and an entity value table that manages entity values as entity value records related to the instance records and the property records, the entity values indicating values in the instances with respect to the respective properties, and the processor characteristically includes: a class management unit for managing the class records; a property management unit for managing the property records; an instance management unit for managing the instance records; and an entity value management unit for managing the entity value records.

## Description

### Technical Field

The present invention relates to a relational database (RDB) system having a variable structure.

### Background Art

Databases of various kinds of information in technical and industrial fields have been compiled, and database systems that store various kinds of information are now used. For example, there are customer information databases and company information databases, and relational databases (RDBs) are used as such databases.

At present, RDB systems using RDBs are widely used as database systems. However, before a RDB system is put into operation, columns (attributes) in data tables need to be designated. Also, a data table needs to be defined for each property of data. Therefore, in a case where the number of columns in a data table is increased after the start of operation, or in a case where a relation between data tables is added or modified, a large change needs to be made in the RDB or the processing program in the RDB system.

In view of this, a RDB system was developed, and this RDB system modifies conventional RDB data tables into an attribute name management table, an attribute value management table, and a combined data management table, and regards the columns (attributes) in data tables as the rows (tuples) in data tables (Patent Literature 1). As the columns (attributes) to be handled as the management items in data tables are arranged in the rows that are handled as the number of pieces of data, an attribute as a management item can be added or deleted in a flexible manner.

### Citation List

### Patent Literature

Patent Literature 1: JP 2013-186774 A

### Summary of Invention

### Technical Problem

By the technology disclosed in Patent Literature 1, increasing/decreasing the number of attributes or modifying an attribute in a data table in a conventional RDB system can be performed in a flexible manner. However, the number of tables in a conventional RDB system cannot be increased, and data tables related to each other cannot be expressed by a variable structure in a RDB. Further, the data types that can be used in tables are restricted to numerical values or character strings defined in advance. In view of this, there is a demand for a RDB system that can change data structures, available data types, relations between data, and the like in a more flexible manner, and can easily perform processing for such changes.

The present invention has been made in view of the above circumstances, and aims to provide a RDB system having a variable structure.

### Solution to Problem

To solve the above problem, the present invention is a relational database (RDB) system for providing a RDB having a variable structure, the RDB system including: the RDB; and a processor that performs processing on the RDB, wherein the RDB includes: a class table that manages classes as class records, the classes defining structural units for storing data; a property table that manages properties as property records related to the class records, the properties being attributes associated with the respective classes; an instance table that manages instances as instance records related to the class records, the instances being entities belonging to the respective classes; and an entity value table that manages entity values as entity value records related to the instance records and the property records, the entity values indicating values in the instances with respect to the respective properties, and the processor includes: a class management unit that manages the class records in accordance with inputted class information; a property management unit that manages the property records in accordance with inputted property information; an instance management unit that manages the instance records in accordance with inputted instance information; and an entity value management unit that manages the entity value records in accordance with inputted entity value information.

With this configuration, tables in a conventional RDB system can be constructed in a variable structure in a RDB. As a result, it becomes possible to provide a RDB that can cope with an increase/decrease in the number of tables, and an increase in the number of information units in each table. Further, there is no need to re-examine or reconstruct the structure of the RDB as required in conventional cases.

The administrator does not need to have knowledge about RDB schema additions and modifications, and can easily add, modify, or delete classes and properties. Further, even if the number of classes and the number of properties increase, the number of schemas in the RDB does not increase. Accordingly, operations such as structure comprehension, maintenance, and backup can be performed in an extremely simple manner.

Also, an instance or an entity value can be registered, acquired, or modified in the same manner for instances of any class. Accordingly, there is no need to develop corresponding tables and columns as in conventional cases. Thus, the costs for constructing a database can be dramatically lowered.

In a preferred mode of the present invention, the entity values in the entity value records can hold reference values as values, the reference values designating at least the instances.

In a preferred mode of the present invention, the property records include type information indicating types of values of the entity values in the entity value records.

In a preferred mode of the present invention, the property records include uniqueness information indicating uniqueness of the entity values in the entity value records.

In a preferred mode of the present invention, the RDB further includes: a language table that manages languages as language records, the languages being used in storing data; a class language table that manages names of the classes in the respective languages as class language records related to the class records and the language records; and a property language table that manages names of the properties in the respective languages as property language records related to the property records and the language records, the processor further includes: a language management unit that manages the language records in accordance with inputted language information; a class language management unit that manages the class language records in accordance with inputted class language information; and a property language management unit that manages the property language records in accordance with inputted property language information, and the entity value records are further related to the language records.

With this configuration, it also becomes possible to provide a RDB system that can manage multilingual data.

In a preferred mode of the present invention, the property language records include rule information indicating rules for inputting the entity values in the entity value records.

With this configuration, input rules can be set for entity values in the respective languages.

In a preferred mode of the present invention, the class records and the property records include sequence information indicating a display sequence in management display.

With this configuration, display can be easily performed on a management screen. Other table records than the class records and the property records, such as the language records in the language table, may also include sequence information indicating a display sequence on a management screen.

The present invention is a management program for providing a relational database (RDB) having a variable structure, the management program causing a computer to function as: a class management unit that manages a class table; a property management unit that manages a property table; an instance management unit that manages an instance table; and an entity value management unit that manages an entity value table, wherein the class table manages classes as class records, the classes defining structural units for storing data; the property table manages properties as property records related to the class records, the properties being attributes associated with the respective classes; the instance table manages instances as instance records related to the class records, the instances being entities belonging to the respective classes; and the entity value table manages entity values as entity value records related to the instance records and the property records, the entity values indicating values in the instances with respect to the respective properties.

The present invention is a server device for providing a relational database (RDB) having a variable structure, the server device including: a class management unit that manages a class table; a property management unit that manages a property table; an instance management unit that manages an instance table; and an entity value management unit that manages an entity value table, wherein the class table manages classes as class records, the classes defining structural units for storing data; the property table manages properties as property records related to the class records, the properties being attributes associated with the respective classes; the instance table manages instances as instance records related to the class records, the instances being entities belonging to the respective classes; and the entity value table manages entity values as entity value records related to the instance records and the property records, the entity values indicating values in the instances with respect to the respective properties.

The present invention is a data management method for managing data having a variable structure, using a plurality of tables stored in a relational database (RDB) format in a database device, the data management method including managing the data, using: a class table that manages classes as class records, the classes defining structural units for storing the data; a property table that manages properties as property records related to the class records, the properties being attributes associated with the respective classes; an instance table that manages instances as instance records related to the class records, the instances being entities belonging to the respective classes; an entity value table that manages entity values as entity value records related to the instance records and the property records, the entity values indicating values in the instances with respect to the respective properties; a class management unit that manages the class table; a property management unit that manages the property table; an instance management unit that manages the instance table; and an entity value management unit that manages the entity value table.

The present invention is a relational database having a variable structure, the relational database including: a class table that manages classes as class records, the classes defining structural units for storing data; a property table that manages properties as property records related to the class records, the properties being attributes associated with the respective classes; an instance table that manages instances as instance records related to the class records, the instances being entities belonging to the respective classes; and an entity value table that manages entity values as entity value records related to the instance records and the property records, the entity values indicating values in the instances with respect to the respective properties.

### Advantageous Effects of Invention

According to the present invention, it is possible to provide a RDB system having a variable structure.

### Brief Description of Drawings

Fig. 1 is a block diagram of a RDB system according to a first embodiment of the present invention.
Fig. 2 is an ER diagram at a time when a RDB according to the first embodiment of the present invention is compatible with different languages.
Fig. 3 is an ER diagram at a time when the RDB according to the first embodiment of the present invention is not compatible with different languages.
Fig. 4 is an example of data tables of the RDB according to the first embodiment of the present invention.
Fig. 5 is an example of data tables of the RDB according to the first embodiment of the present invention.
Fig. 6 is an example of data tables of the RDB according to the first embodiment of the present invention.
Fig. 7 is an example of a RDB management screen according to the first embodiment of the present invention.
Fig. 8 is an example of a RDB management screen according to the first embodiment of the present invention.
Fig. 9 is a process flowchart of a management process in the RDB system according to the first embodiment of the present invention.
Fig. 10 is a process flowchart of an output/input process in the RDB system according to the first embodiment of the present invention.
Fig. 11 is a process flowchart of an output/input process in the RDB system according to the first embodiment of the present invention.
Fig. 12 is a block diagram of a RDB system according to a second embodiment of the present invention.
Fig. 13 is a process flowchart of a management process in the RDB system according to the second embodiment of the present invention.

### Description of Embodiments

### <First Embodiment>

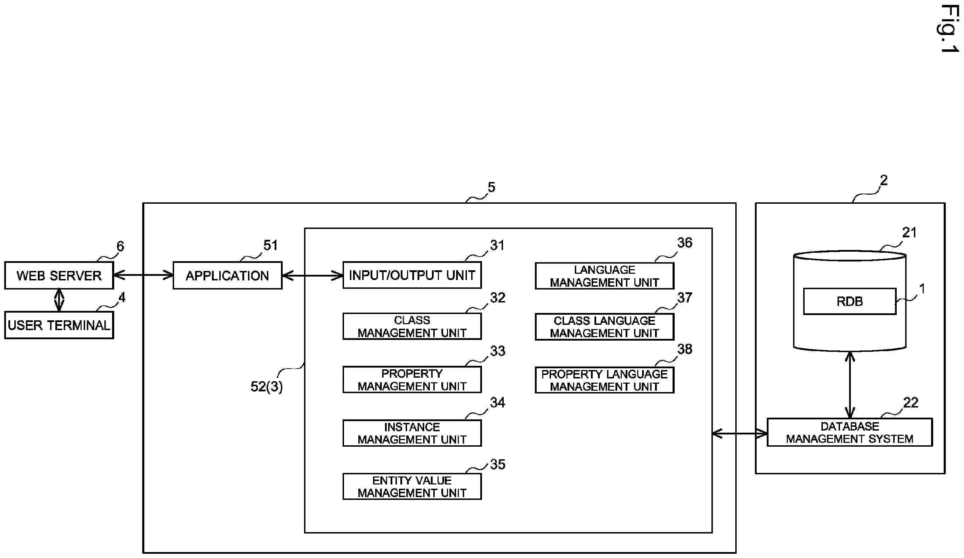

The following is a description of a RDB system according to a first embodiment of the present invention, with reference to Figs. 1 through 11. It should be noted that the embodiment described below is merely an example of the present invention, and the present invention is not limited to the embodiment described below. In this embodiment, a processor for performing processing on a RDB having a data structure according to this embodiment is provided as a framework in an application server. Although the configuration and operation of a RDB system will be described in this embodiment, similar function effects can be achieved with a method, a device, a computer program, a recording medium, or the like having a similar configuration. The program may be stored in the recording medium. With this recording medium, the program can be installed into a computer, for example. Here, the recording medium storing the program may be a non-transitory recording medium, such as a CD-ROM.

Fig. 1 is a functional block diagram of a RDB system according to this embodiment. Reference numeral 1 indicates a RDB having a data structure according to this embodiment, reference numeral 2 indicates a database device including the RDB 1, reference numeral 3 indicates a processor, reference numeral 4 indicates a user terminal, reference numeral 5 indicates an application server that stores an application program for performing particular business processing, and reference numeral 6 indicates a web server. The web server 6 may be provided integrally with the application server 5. Further, the web server 6 is not necessarily prepared.

The database device 2 includes a readable/writable storage device 21 that stores data in a RDB format, and a database management system 22. The database management system 22 includes a unit that receives a request from the processor 3, and a RDB management unit for managing the RDB 1 stored in the storage device 21 in accordance with the request from the processor 3. It should be noted that data other than the RDB 1 may also be stored in the storage device 21.

The application server 5 includes an application 51 that requests particular business processing for the processor 3 in accordance with a request from a user (a user request), and the processor 3 provided as a framework 52. The application 51 issues a processing request to the processor 3 in accordance with the user request, and makes an output based on data received from the processor 3. The data and the processing results the application server 5 obtains from the database device 2 are sent to the user terminal 4 via the web server 6.

The processor 3 includes: an input/output unit 31 for receiving a processing request from the application 51 and outputting data; a class management unit 32 for performing management, such as adding, modifying, deleting, and searching, on the record fields in a class table; a property management unit 33 for performing management, such as adding, modifying, deleting, and searching, on the record fields in a property table; an instance management unit 34 for performing management, such as adding, modifying, deleting, and searching, on the record fields in an instance table; an entity value management unit 35 for performing management, such as adding, modifying, deleting, and searching, on the record fields in an entity value table; a language management unit 36 for performing management, such as adding, modifying, deleting, and searching, on the record fields in a language table; a class language management unit 37 for performing management, such as adding, modifying, deleting, and searching, on the record fields in a class language table; and a property language management unit 38 for performing management, such as adding, modifying, deleting, and searching, on the record fields in a property language table.

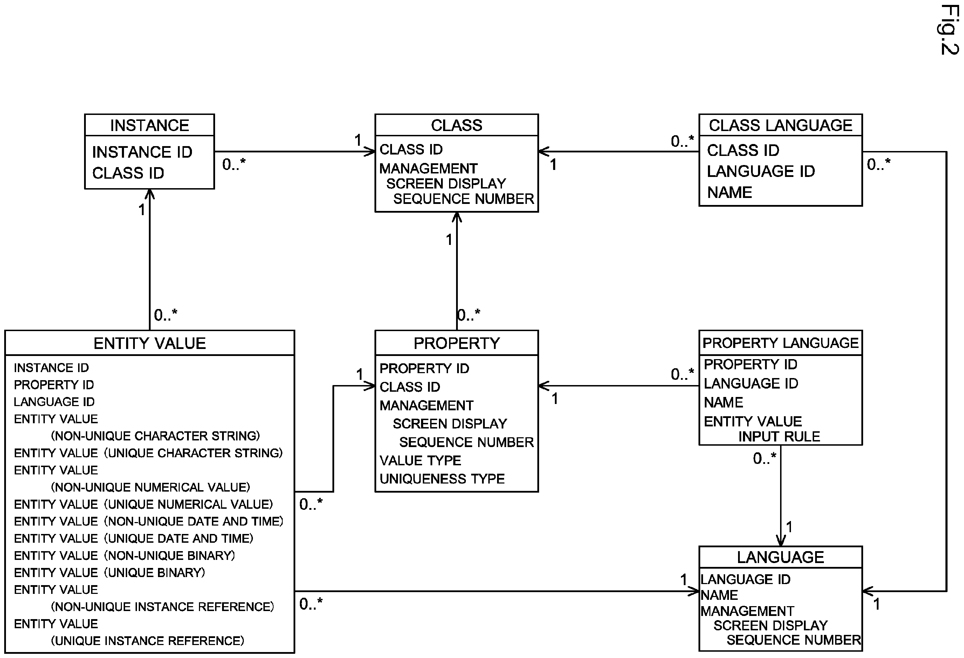

Referring now to Figs. 2 through 6, the data model structure of the RDB 1 in a multilingual mode, and specific examples of the class table, the property table, the instance table, the entity value table, the language table, the class language table, and the property language table in the data model structure are described.

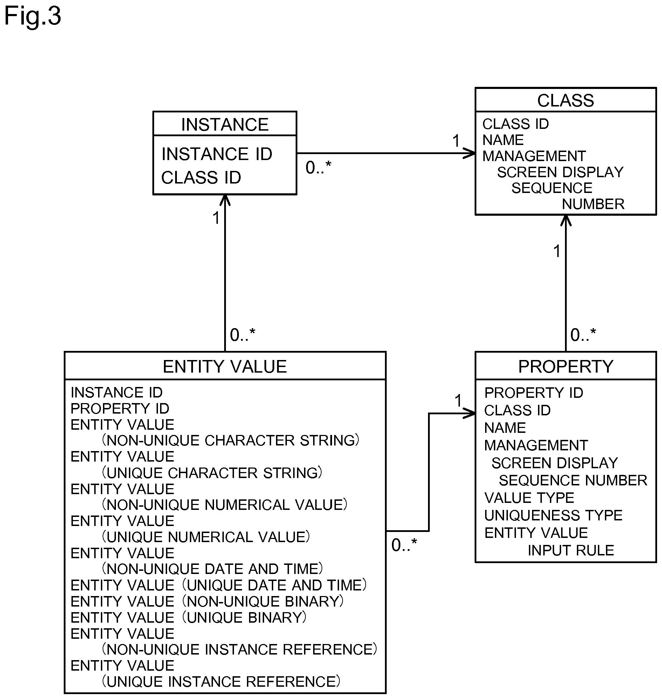

Fig. 2 shows the data model structure of the multilingual RDB system according to the first embodiment, and is an entity relationship (ER) diagram showing the relationships between the tables. The RDB 1 according to the first embodiment contains the class table, the property table, the instance table, the entity value table, the language table, the class language table, and the property language table. In a case where the RDB system is not compatible with different languages, there is no need for the RDB 1 to contain the language table, the class language table, and the property language table. Fig. 3 shows an ER diagram of the data model structure of a monolingual RDB 1.

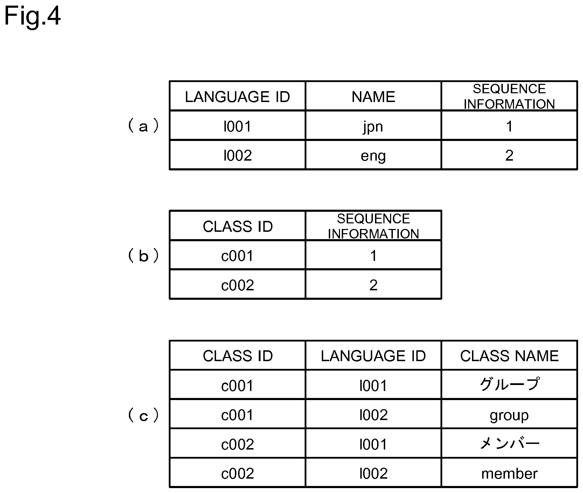

Fig. 4 (a) is a diagram showing an example of the language table. The language table manages the languages to be used for storing data, as language records . The language records in this embodiment include language IDs as the primary keys, and further include the names of the languages and sequence information indicating the display sequence on the later described management screen. In the first embodiment, an example case where a RDB 1 is compatible with the two languages, Japanese (jpn) and English (eng), is described. It is also possible to further add some other language to this database, so that a flexible database compatible with an addition of a language can be constructed.

Fig. 4(b) is a diagram showing an example of the class table. The class table manages classes defining the structural units for storing data, as class records. The class records in this embodiment include class IDs as the primary keys, and further include the sequence information. These classes correspond to what define the respective tables in a conventional RDB.

Fig. 4(c) is a diagram showing an example of the class language table. The class language table manages the names of the classes in the respective languages as class language records related to the class records and the language records. The class language records in this embodiment include class IDs and language IDs as the primary keys, and further include the names of the classes in each language. The class languages are designed to manage the names of the respective classes in each of the languages set in the language table. In a case where the RDB 1 is not compatible with different languages, the class records may include the names of the classes.

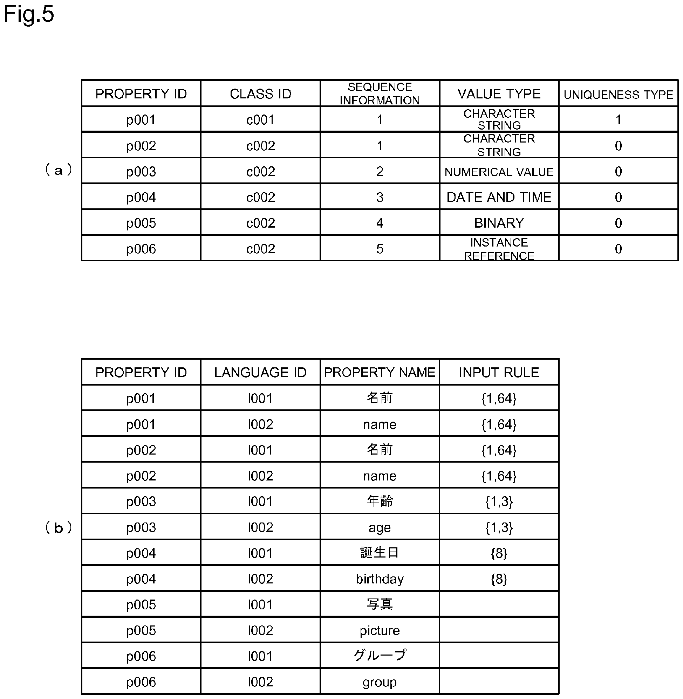

Fig. 5 (a) is a diagram showing an example of the property table. The property table manages properties that are the attributes associated with the respective classes, as property records related to the class records. The property records in this embodiment include property IDs as the primary keys, and further include the class IDs, the sequence information, later described type information about the value types of entity values, and uniqueness information about the uniqueness types of the entity values. The property records may further include fields for NOTNULL constraints on the entity values and setting of the initial values of the entity values. The properties correspond to what define the attributes of the respective tables in a conventional RDB.

Fig. 5 (b) is a diagram showing an example of the property language table. The property language table manages the names of the properties in the respective languages as property language records related to the property records and the language records. The property language records in this embodiment include property IDs and language IDs as the primary keys, and further include the names of the properties in each language, and input rules for the entity values in each language. The property languages are designed to manage the names of the respective properties in each of the languages set in the language table. In a case where the RDB 1 is not compatible with different languages, the property records may include the names of the properties and the input rules for the entity values in each language.

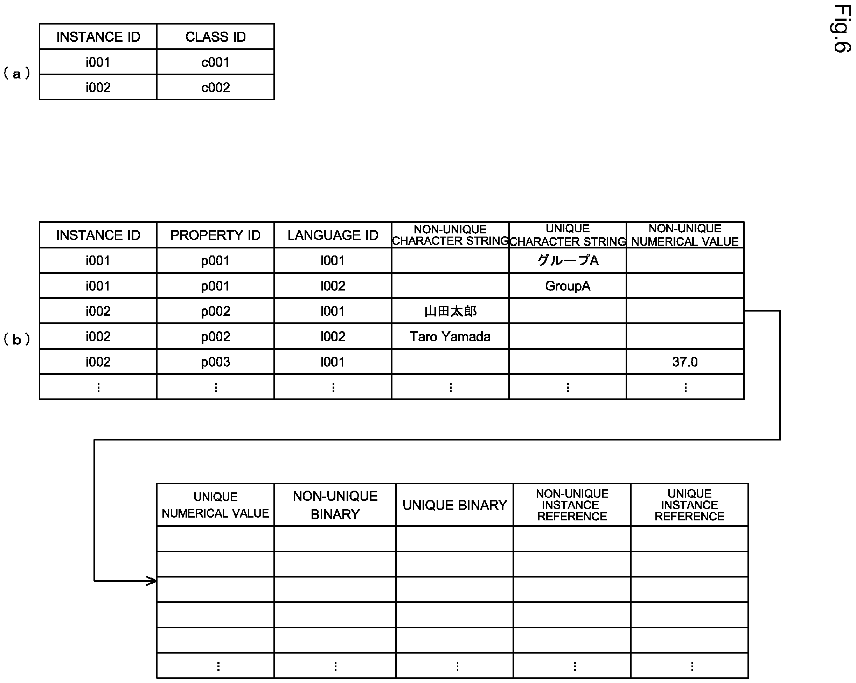

Fig. 6 (a) is a diagram showing an example of the instance table. The instance table manages instances that are the entities belonging to the respective classes, as instance records related to the class records. The instance records in this embodiment include instance IDs as the primary keys, and further include class IDs.

Fig. 6(b) is a diagram showing an example of the entity value table. The entity value table manages the entity values indicating the values the instances hold for the respective properties, as entity value records related to the instance records and the property records. The entity value records in this embodiment include instance IDs, property IDs, and language IDs as the primary keys, and further include non-unique character strings, unique character strings, non-unique numerical values, unique numerical values, non-unique dates and times, unique dates and times, non-unique binaries, unique binaries, non-unique instance references, and unique instance references as entity values. The non-unique instance references and the unique instance references are reference values for referencing other instances. This embodiment is designed so that, when an instance ID is designated, for example, the instances of a group as an entity can be referenced. Further, in addition to an instance, a property may also be designated, so that the other entity values can be held as reference values . In that case, entity value references are added as value type information, and a field for unique/non-unique entity value references should be formed in the entity value records.

As an instance reference is held as an entity value, relations in a conventional RDB can be defined, and it becomes possible to provide a RDB system that can flexibly add and modify relations. In the examples in Figs. 4 through 6, a group set as an instance (i001) is selected as an instance reference, for example. As a result, the relations between the respective members set by an instance (i002) and the groups set by the instance (i001) are defined, and the groups to which the respective members belong can be set. With this structure, it is possible to provide a system compatible with a wide variety of data types. Accordingly, strict data management necessary in a realistic system operation can be conducted, and can be applied to various systems.

Further, in the entity value table of this embodiment, complex unique constraints are imposed on combinations of a property ID and a language ID and a unique character string, a property ID and a language ID and a unique numerical value, a property ID and a language ID and a unique date and time, a property ID and a language ID and a unique binary, and a property ID and a language ID and a unique instance reference.

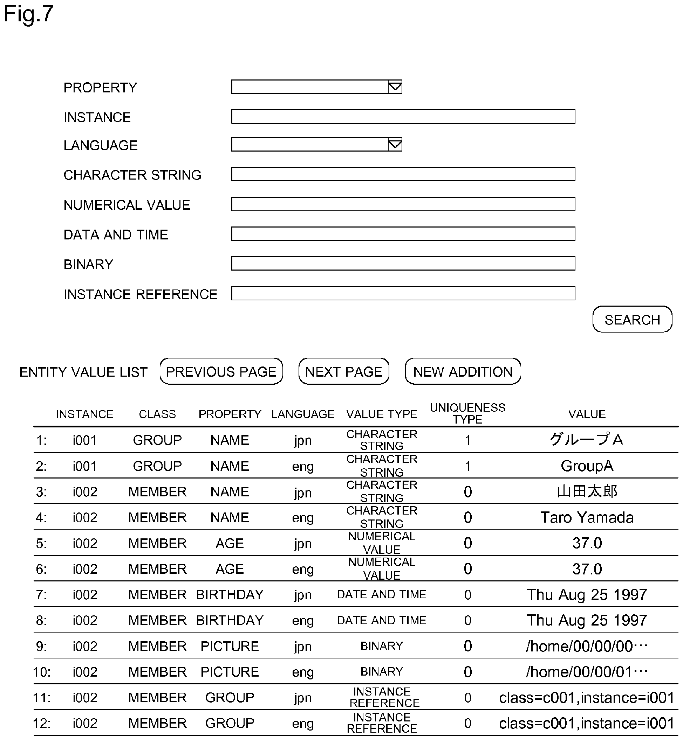

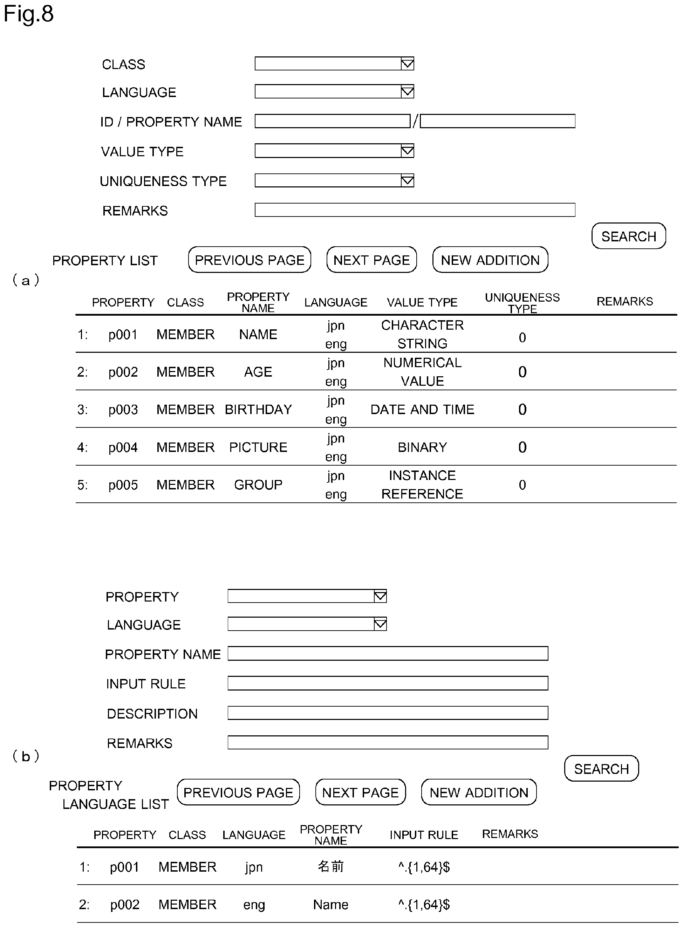

Figs. 7 and 8 show examples of management screens to be displayed on the user terminal 4. Fig. 7 is a diagram showing an example of a management screen to be displayed when entity values are managed. Through this management screen, a user can perform management, such as searching or adding a record, on the RDB 1. Fig. 8(a) is a diagram showing an example of a management screen to be displayed when properties are managed. Fig. 8 (b) is a diagram showing an example of a management screen to be displayed when property languages are managed. Classes, class languages, languages, and instances can also be managed through a similar management screen. Each record may further include information, such as remarks to be used on a management screen.

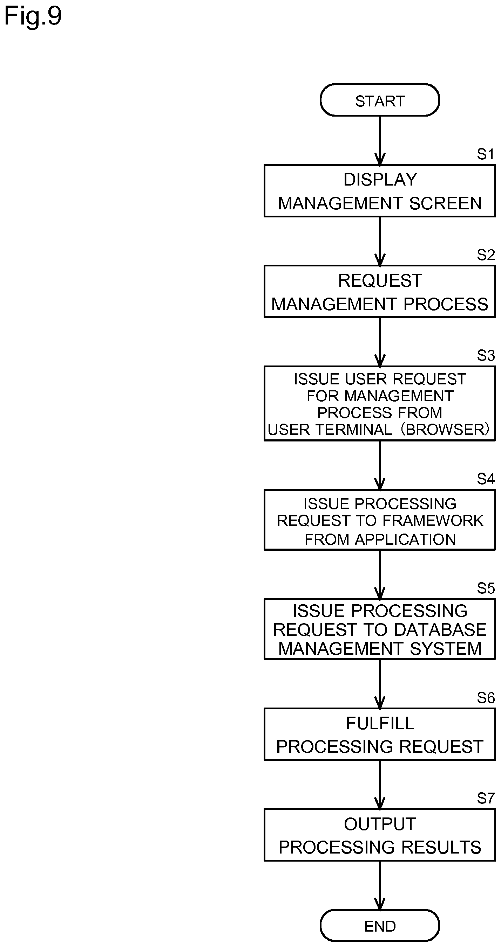

Referring next to Fig. 9, the process flow at a time when a record is added through a management screen is described. In this embodiment, an example where a property record is added to the property table is described. It should be noted that, in a case where a record such as a class record or an instance record is added, edited, or deleted in each table, processing procedures similar to those described below can be carried out. Also, in a case where predetermined data is obtained in accordance with a request through a search process or a web page display process, processing procedures similar to those described below can be carried out. This management process for adding, modifying, deleting, searching, or the like is not necessarily performed through a management screen, but may be performed by a method other than making a request through a management screen as in an example described in this embodiment.

Using the web browser of the user terminal 4, a user accesses the web server 6, and requests provision of management screens. The user request for provision of management screens is transferred to the application server 5 by the web server 6. The application server 5 receives necessary information from the database device 2, and provides each management screen to the user terminal 4 via the application 51 and the web server 6 (S1).

The user selects a new addition of a property record from the provided property management screen, and issues a new property addition request (S2). To add a new property, the user selects the class for which the property is intended, and inputs entity value type information, uniqueness information, a property ID, and sequence information. Here, predetermined items, such as a property ID and sequence information, may be automatically set.

Also, an input of the name of the property in each language and the input rule for entity values in each language may be received at the same time, so that the property language records in addition to the property records can be managed. A structure or the like that can manage a class language when adding a class record may be formed so that matters related to tables in the RDB 1 can be managed.

The information about the new property inputted by the user is transferred as a user request for adding the new property, to the application server 5 by the web server 6 (S3). In the application server 5, the application 51processes the received user request, and issues a property record adding instruction to the processor 3 (S4).

The processor 3 receives the property record adding instruction from the application 51 through the input/output unit 31. In accordance with the received adding instruction, the processor 3 accesses the database management system 22 via a database driver such as JDBC or ODBC, using the property management unit 33. The processor 3 then issues a property adding request (S5). In accordance with the new property adding instruction received from the processor 3, the database management system 22 adds the new property record to the property table (S6). The results of the processing in the database device 2 are transferred to the application 51, and are processed into predetermined data to be handled in the web server 6. The web browser of the user terminal 4 is then notified of the results of the processing (S7).

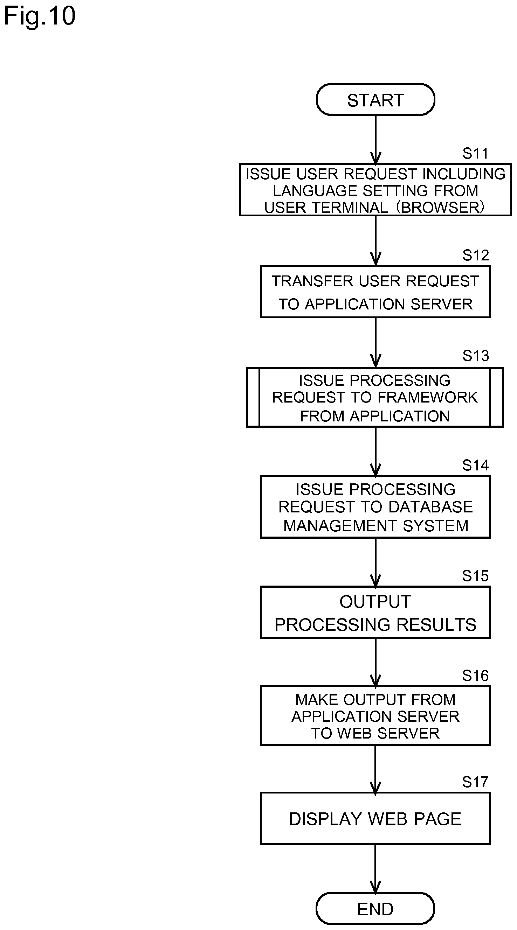

Referring next to Fig. 10, an output/input process to be performed by a user via a web page is described. Using the web browser of the user terminal 4, the user accesses the web server 6, and requests an output/input process (S11) . The user request includes the language setting for the browser being used by the user. The web server 6 obtains the user request including the language setting, and transfers the user request to the application server 5 (S12).

The application 51, which has received the user request including the language setting, then determines the language setting included in the user request. In a case where the RDB 1 is not compatible with the language in the language setting, some other supported language is designated and set as language information. In accordance with the language information and the user request, the application 51 issues a processing request to the processor 3 (S13).

In accordance with the received processing request, the processor 3 accesses the database management system 22 via a database driver such as JDBC or ODBC, and issues a data processing request (S14). The database management system performs the requested processing, and outputs processing results (S15). This output is transferred to the application 51, and is processed into predetermined data to be handled in the web server 6 (S16) . The web server 6, which has received the data, sends a notification to the web browser of the user terminal 4 (S17).

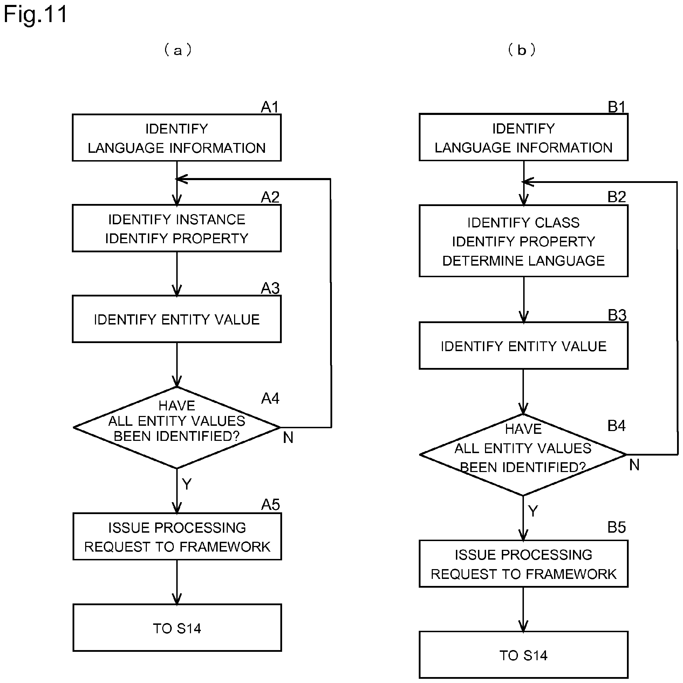

Referring now to Fig. 11(a), an example of a process of outputting data to the user in S13 is described. This example may be a case where dynamic content is displayed to the user through the web browser, or a case where a request for outputting certain data is made by the user, for example.

The application 51, which has received the user request including the language setting, identifies the entity values requested to be outputted, in accordance with the user request (S13) . The language is identified from the determined language information (A1). In a case where the language in the language setting is a language that can be used in the RDB 1, the language in the language setting is the language for the data to be outputted. In a case where the language in the language setting is not a language that can be used in the RDB 1, a predetermined language becomes the language for the data to be outputted.

The instance and the property related to the entity values to be outputted are identified from the user request (A2) . One of the entity values in the entity value records is identified from the language determined in A1 and the instance and the property identified in A2 (A3).

If all the entity values included in the user request are identified (A4Y), a processing request is issued to the framework (A5). The process then moves on to S14, and the data of the identified entity values are obtained from the RDB 1 through the entity value management unit 35. In a case where more than one entity value about this instance is to be obtained, or where all the data of the class is to be obtained, the processes in A2 and A3 should be repeated (A4N) . It should be noted that a processing request may be issued to the framework or the database management system, and the determination in A4 as to whether to repeat the processes may be made at different timings from above. For example, a processing request may be issued to the framework after A3, and the determination (A4) as to whether to repeat the processes may be made after processing results are received from the database management system in S15.

Also, in a case where all the entity value data included in a certain class in a certain language is to be obtained, information designating the class and language setting may be received as a user request. In this case, the instance including the designated class is first detected and received from the RDB 1 via the processor 3, and a request may be issued to the processor 3 to obtain all the pieces of the entity value data that include this instance and correspond to the language information.

Referring now to Fig. 11 (b), an example of a process of inputting data from the user in S13 is described. This example may be a case where data of the user is obtained from an input form and is then stored, or a case where order data is stored, for example.

The application 51, which has received the user request including the language setting, identifies the instance requested to be inputted, in accordance with the user request (S13). From the language setting, the application 51 determines the language information (B1). The language setting may be used in identifying the language of the entity values. In a case where a data storage structural unit is defined for each language with a class, the language setting may be used in identifying the class or the like.

The class and the property related to the entity values to be inputted are identified from the user request (B2). The language may be determined in accordance with the user request except for the language setting, or may be determined in accordance with the language information identified from the language setting.

In a case where new data of the user is to be registered, a request for creation of a new instance belonging to the class identified in B2 is issued to the processor 3. One piece of entity value data is identified from the created instance and the property and the language identified in B2 (B3).

If all the entity values included in the user request are identified (B4Y), a processing request is issued to the framework (B5). The process then moves on to S14, and the data of the identified entity values are stored into the RDB 1 through the entity value management unit 35. In a case where more than one entity value about this instance is to be stored, the processes in B2 and B3 should be repeated (B4N).

In a case where the data about a certain instance is to be overwritten, information designating the instance, information designating a property, and language setting may be received as a user request. In this case, a request for overwriting of an identified entity value record is issued to the processor 3.

According to the present invention, tables in a conventional RDB system can be constructed in a variable structure in a RDB. With this, it becomes possible to provide a RDB that can cope with an increase/decrease in the number of tables, and an increase in the number of information units in each table.

Also, there is no need to define a data table for each property of data as in a conventional RDB. Further, a relation between data tables in a conventional RDB can be extremely easily added or modified.

It also becomes possible to provide a RDB system that can manage multilingual data to which languages can be added in a flexible manner.

### <Second Embodiment>

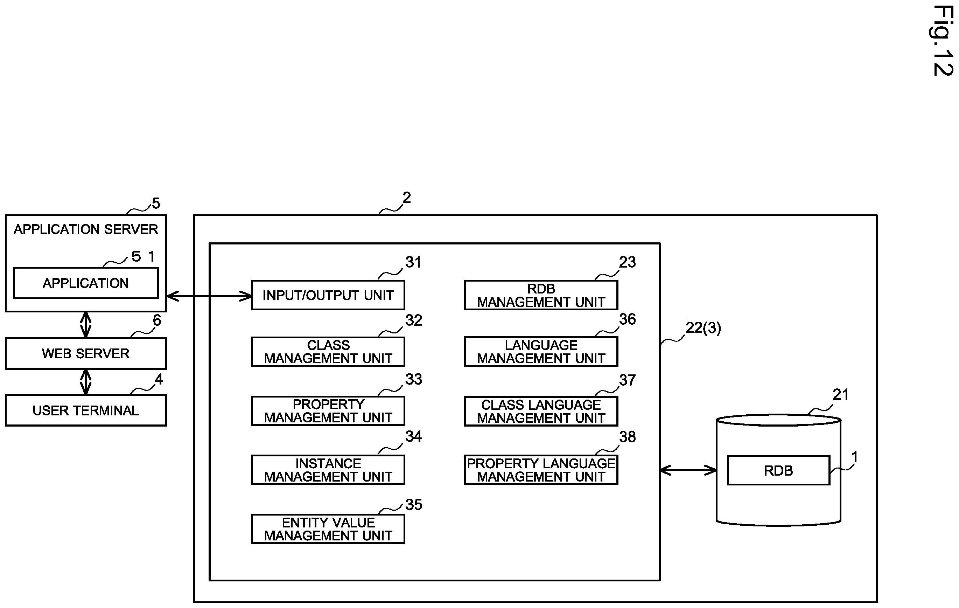

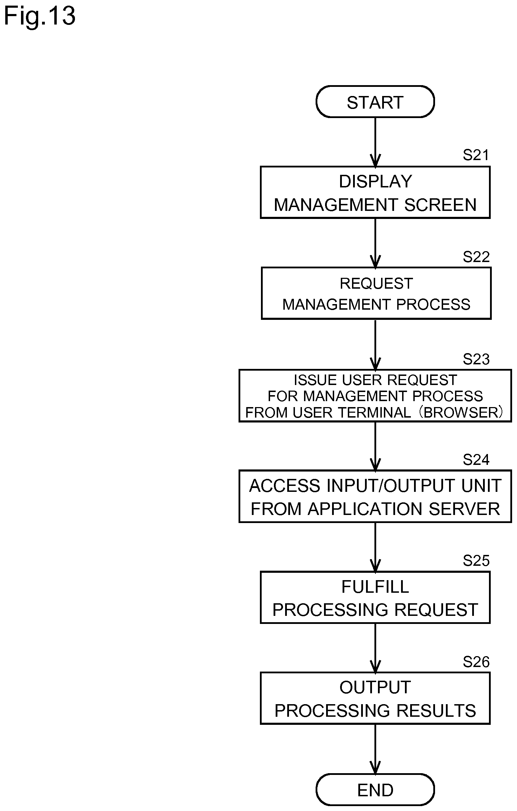

Referring now to Figs. 12 and 13, a RDB system according to a second embodiment of the present invention is described. In this embodiment, components that are basically the same as those of the foregoing embodiment are denoted by the same reference numerals as those used in the foregoing embodiment, and explanation of them will be only briefly made.

In the second embodiment, respective management units that manage a RDB 1 having a data structure according to the present invention are provided as the basic functions of a database management system 22. As shown in Fig. 12, the database management system 22 includes a RDB management unit 23 for managing a RDB stored in a storage device 21 in accordance with a request from an application server 5, an input/output unit 31 that receives the request from the application server, a class management unit 32, a property management unit 33, an instance management unit 34, an entity value management unit 35, a language management unit 36, a class language management unit 37, and a property language management unit 38.

It should be noted that, in a case where the RDB system is not compatible with different languages as shown in Fig. 3, there is no need for the RDB to contain a language table, a class language table, and a property language table, as in the first embodiment. The web server 6 may be provided integrally with the application server 5. Further, the web server 6 is not necessarily prepared.

Referring now to Fig. 13, a processing flow of a management process in the RDB 1 in this embodiment is described. In this embodiment, an example where an entity value record is added to the entity value table is described. It should be noted that, in a case where a record such as a class record or a property record is added, edited, or deleted in each table, a processing flow similar to that described below can be applied. Also, in a case where predetermined data is obtained in accordance with a request through a search process or a web page display process, a processing flow similar to that described below can be applied.

Using the web browser of the user terminal 4, a user accesses the web server 6, and requests provision of management screens. The user request for provision of management screens is transferred to the application server 5 by the web server 6. The application server 5 receives necessary information from the database device 2, and provides each management screen to the user terminal 4 via the application 51 and the web server 6 (S21).

The user selects a new addition of an entity value record from the provided entity value management screen, and issues a new entity value addition request (S22) . To add a new entity value, the user selects the instance, the property, and the language for which the entity value is intended, and inputs the entity value. The input of this entity value is constrained by the value type information and the uniqueness information set in the property record of the selected property, and the entity value input rule set in the property language record of the selected language and property. Here, matters related to more than one table in the RDB 1 can be further managed.

The information about the new entity value inputted by the user is transferred as a user request for adding the new entity value, to the application server 5 via the web server 6 (S23) . The application server 5 processes the received user request with the application 51, and accesses the input/output unit 31 via a database driver such as JDBC or ODBC (S24). In accordance with the received adding instruction, the entity value management unit 35 adds the new entity value record to the entity value table (S25). The results of the processing in the database device 2 are transferred to the application 51, and are processed into predetermined data to be handled in the web server 6. The web browser of the user terminal 4 is then notified of the results of the processing (S26).

According to the present invention, tables in a conventional RDB system can be constructed in a variable structure in a RDB. With this, it becomes possible to provide a RDB that can cope with an increase/decrease in the number of tables, and an increase in the number of information units in each table.

Also, there is no need to define a data table for each property of data as in a conventional RDB. Further, a relation between data tables in a conventional RDB can be extremely easily added or modified.

It also becomes possible to provide a RDB system that can manage multilingual data to which languages can be added in a flexible manner.

Further, as the management units for managing a RDB having a data structure according to the present invention are incorporated into the basic functions of the database management system, read consistency increases, and the present invention can be effectively provided.

### Industrial Applicability

The present invention can provide a multilingual RDB system that has a variable structure and is suitable for managing data that is large in size and is often modified.

### Reference Signs List

- 1: RDB
- 2: Database device
- 21: Storage device
- 22: Database management system
- 23: RDB management unit
- 3: Processor
- 31: Input/output unit
- 32: Class management unit
- 33: Property management unit
- 34: Instance management unit
- 35: Entity value management unit
- 36: Language management unit
- 37: Class language management unit
- 38: Property language management unit
- 4: User terminal
- 5: Application server
- 51: Application
- 52: Framework
- 6: Web server

## Claims

1. A relational database (RDB) system for providing a RDB having a variable structure,
the RDB system comprising:
the RDB; and
a processor that performs processing on the RDB,
wherein
the RDB includes:
a class table that manages classes as class records, the classes defining structural units for storing data;
a property table that manages properties as property records related to the class records, the properties being attributes associated with the respective classes;
an instance table that manages instances as instance records related to the class records, the instances being entities belonging to the respective classes; and
an entity value table that manages entity values as entity value records related to the instance records and the property records, the entity values indicating values in the instances with respect to the respective properties, and
the processor includes:
a class management unit that manages the class records in accordance with inputted class information;
a property management unit that manages the property records in accordance with inputted property information;
an instance management unit that manages the instance records in accordance with inputted instance information; and
an entity value management unit that manages the entity value records in accordance with inputted entity value information.

2. The RDB system according to claim 1, wherein the entity values in the entity value records can hold reference values as values, the reference values designating at least the instances.

3. The RDB system according to claim 1 or 2, wherein the property records include type information indicating types of values of the entity values in the entity value records.

4. The RDB system according to any of claims 1 to 3, wherein the property records include uniqueness information indicating uniqueness of the entity values in the entity value records.

5. The RDB system according to any of claims 1 to 4, wherein
the RDB further includes:
a language table that manages languages as language records, the languages being used in storing data;
a class language table that manages names of the classes in the respective languages as class language records related to the class records and the language records; and
a property language table that manages names of the properties in the respective languages as property language records related to the property records and the language records,
wherein the processor further includes:
a language management unit that manages the language records in accordance with inputted language information;
a class language management unit that manages the class language records in accordance with inputted class language information; and
a property language management unit that manages the property language records in accordance with inputted property language information, and
the entity value records are further related to the language records.

6. The RDB system according to claim 5, wherein the property language records include rule information indicating rules for inputting the entity values in the entity value records.

7. The RDB system according to any of claims 1 to 6, wherein the class records and the property records include sequence information indicating a display sequence in management display.

8. A management program for providing a relational database (RDB) having a variable structure,
the management program causing a computer to function as:
a class management unit that manages a class table;
a property management unit that manages a property table;
an instance management unit that manages an instance table; and
an entity value management unit that manages an entity value table,
wherein
the class table manages classes as class records, the classes defining structural units for storing data;
the property table manages properties as property records related to the class records, the properties being attributes associated with the respective classes;
the instance table manages instances as instance records related to the class records, the instances being entities belonging to the respective classes; and
the entity value table manages entity values as entity value records related to the instance records and the property records, the entity values indicating values in the instances with respect to the respective properties.

9. A server device for providing a relational database (RDB) having a variable structure,
the server device comprising:
a class management unit that manages a class table;
a property management unit that manages a property table;
an instance management unit that manages an instance table; and
an entity value management unit that manages an entity value table,
wherein
the class table manages classes as class records, the classes defining structural units for storing data;
the property table manages properties as property records related to the class records, the properties being attributes associated with the respective classes;
the instance table manages instances as instance records related to the class records, the instances being entities belonging to the respective classes; and
the entity value table manages entity values as entity value records related to the instance records and the property records, the entity values indicating values in the instances with respect to the respective properties.

10. A data management method for managing data having a variable structure, using a plurality of tables stored in a relational database (RDB) format in a database device,
the data management method comprising
managing the data, using:
a class table that manages classes as class records, the classes defining structural units for storing the data;
a property table that manages properties as property records related to the class records, the properties being attributes associated with the respective classes;
an instance table that manages instances as instance records related to the class records, the instances being entities belonging to the respective classes;
an entity value table that manages entity values as entity value records related to the instance records and the property records, the entity values indicating values in the instances with respect to the respective properties;
a class management unit that manages the class table;
a property management unit that manages the property table;
an instance management unit that manages the instance table; and
an entity value management unit that manages the entity value table.
